# EUROPÄISCHE PATENTSCHRIFT

(11) **EP 3 186 853 B1**
(45) Veröffentlichungstag und Bekanntmachung des Hinweises auf die Patenterteilung: **12.12.2018**
(21) Anmeldenummer: 15744578.4
(22) Anmeldetag: 30.07.2015
(51) Int. Cl.: H01M 10/48, F25B 21/04, H01M 10/6556, H01M 10/6572, H01M 10/617, H01M 2/10

(54) **TEMPERIEREINRICHTUNG**
TEMPERATURE CONTROL DEVICE
DISPOSITIF D'ÉQUILIBRAGE DE TEMPÉRATURE

(30) Priorität: 29.08.2014 DE 102014217336
(43) Veröffentlichungstag der Anmeldung: 05.07.2017
(73) Patentinhaber: MAHLE International GmbH, 70376 Stuttgart (DE)
(72) Erfinder: HIRSCH, Stefan, 70180 Stuttgart (DE); GRÜNWALD, Jürgen, 71638 Ludwigsburg (DE); TREIER, Joachim, 77728 Oppenau (DE)
(74) Vertreter: BRP Renaud & Partner mbB Rechtsanwälte Patentanwälte Steuerberater
(86) Internationale Anmeldenummer: PCT/EP2015/067581
(87) Internationale Veröffentlichungsnummer: WO 2016/030127

(56) Entgegenhaltungen:
- DE-A1-102011 004 721
- DE-A1-102012 215 056
- Anonymous: "Peltier-Element - Wikipedia", , 20. August 2014 (2014-08-20), XP055215541, Gefunden im Internet: URL:https://de.wikipedia.org/w/index.php?t itle=Peltier-Element&oldid=133275349 [gefunden am 2015-09-23]
- Anonymous: "Magnetventil - Wikipedia", , 24. März 2014 (2014-03-24), XP055215480, Gefunden im Internet: URL:https://de.wikipedia.org/wiki/Magnetve ntil [gefunden am 2015-09-23]

## Beschreibung

Die Erfindung betrifft eine Temperiereinrichtung sowie eine Batterie-Anordnung mit einer solchen Temperiereinrichtung.

In modernen Hybrid- und Elektrokraftfahrzeugen kommen oftmals Lithium-Ionen-Batterien als wiederaufladbare Energiespeicher zum Einsatz. Eine hinsichtlich Lebensdauer und maximaler Energiespeichermenge optimierte Batterie benötigt für die einzelnen Batteriezellen eine entsprechend leistungsfähige Temperiereinrichtung, welches insbesondere eine Erwärmung der Batterie über eine maximale Betriebstemperatur hinaus zu verhindern vermag.

Aus dem Stand der Technik sind vor diesem Hintergrund aktive Temperiereinrichtungen bekannt, die eine von einem Temperier-Medium in Form eines Fluids durchströmbare Temperierstruktur umfassen. Eine solche Temperierstruktur weist typischerweise zwei einen Fluidkanal begrenzende Temperierplatten auf. Besagte Temperierstruktur wirkt als Wärmequelle oder Wärmesenke und erlaubt den Wärmeaustausch zwischen der zu temperierenden Batterie und dem Fluid. Der Wärmeaustausch kann von thermoelektrischen Elementen in Form sogenannter Peltier-Elemente unterstützt werden, die an definierten Stellen zwischen der zu temperierenden Batterie und den Temperierplatten angebracht werden.

Aus dem Stand der Technik ist beispielsweise die DE 10 2012 211 259 A1 bekannt, die eine derartige Temperiereinrichtung beschreibt.

Als problematisch bei solchen Temperiereinrichtungen erweist es sich, in den einzelnen Batteriezellen einer thermisch an die Temperiereinrichtung gekoppelten Batterie eine möglichst homogene Kühlung dieser Batteriezellen zu erzielen.

Es ist daher eine Aufgabe der vorliegenden Erfindung, eine verbesserte Ausführungsform einer Temperiereinrichtung zu schaffen, welche besagte homogene Temperierung der Batteriezellen einer thermisch an die Temperiereinrichtung gekoppelten Batterie ermöglicht. Es ist ferner eine Aufgabe der vorliegenden Erfindung, eine Batterie-Anordnung mit einer solchen Temperiereinrichtung zu schaffen.

Aus dem Stand der Technik ist die DE 10 2011 004 721 A1 bekannt, die eine ähnliche Temperiereinrichtung beschreibt.

Die Erfindung stellt eine Temperiereinrichtung nach Anspruch 1 zur Verfügung. Bevorzugte Ausführungsformen sind Gegenstand der abhängigen Patentansprüche.

Grundgedanke der Erfindung ist demnach, eine Temperiereinrichtung mit wenigstens zwei Elementreihen aus thermoelektrischen Elementen auszustatten, wobei wenigstens eine Elementreihe mit Hilfe eines elektrischen Schaltelements wahlweise elektrisch ein- oder ausgeschaltet werden kann.

Auf diese Weise können die thermoelektrischen Elemente einer jeden Elementreihe individuell zur Temperierung der thermisch an die thermoelektrischen Elemente gekoppelten Batteriezelle aktiviert oder deaktiviert werden.

Dies ermöglicht es insbesondere, auf sogenannte "Hotspots" in der zu temperierenden Batteriezelle zu reagieren. Darunter sind lokale Gehäusezonen der Batteriezelle mit lokal erhöhter oder erniedrigter Temperatur zu verstehen, die wiederum eine lokal erhöhte bzw. reduzierte Temperier-Leistung erfordern, um eine insgesamt homogene Temperierung der Batteriezelle zu erzielen.

Das hier vorgestellte Konzept wenigstens einer wahlweise ein- oder abschaltbaren Elementreihe aus thermoelektrischen Elementen entfaltet jedoch seine vorteilhafte Wirkung in besonderem Maße dann, wenn nicht nur in einer Elementreihe ein steuerbares elektrisches Schaltungselement vorhanden ist, sondern in möglichst vielen der vorhandenen Elementreihen, besonders bevorzugt in allen vorhandenen Elementreihen. Mit zunehmender Anzahl an solchen elektrischen Schaltungselementen lässt sich die erzielbare Flexibilität hinsichtlich individuell zu temperierender Bereiche der Batteriezelle nachhaltig verbessern.

Eine erfindungsgemäße Temperiereinrichtung zum Temperieren wenigstens einer Batteriezelle einer Batterie umfasst eine von einem Fluid durchströmbare Temperierstruktur, deren Innenraum von wenigstens einer Leitungswand begrenzt wird. Typischerweise kann eine solche Temperierstruktur rohrartig, etwa in der Art eines Flachrohrs ausgebildet sein, so dass dessen Leitungswände den Innenraum der Temperierstruktur begrenzen. Ferner umfasst die erfindungsgemäße Temperiereinrichtung wenigstens ein thermoelektrisches Modul, das auf einer vom Innenraum der Temperierstruktur abgewandten Seite an der Leitungswand der Temperierstruktur angeordnet ist. Das thermoelektrische Modul weist eine erste und wenigstens eine zweite Elementreihe mit jeweils wenigstens zwei thermoelektrischen Elementen auf, wobei sich die wenigstens zwei Elementreihen jeweils entlang einer Erstreckungsrichtung erstrecken. Diese aus wenigstens zwei thermoelektrischen Elementen gebildeten Elementreihen übernehmen die Funktion konventioneller Peltier-Elemente.

Erfindungsgemäß ist nun in wenigstens einer Elementreihe ein elektrisches Schaltelement vorgesehen, welches zwischen einem geschlossenen und einem geöffneten Zustand umschaltbar ist. Im geschlossenen Zustand kann elektrischer Strom durch die thermoelektrischen Elemente der dem Schaltelement zugeordneten Elementreihe strömen, im geöffneten Zustand ist dies nicht möglich.

Ein geometrisch besonders kompakter Aufbau der Temperiereinrichtung lässt sich in einer bevorzugten Ausführungsform erzielen, gemäß welcher die thermoelektrischen Elemente einer Elementreihe im Wesentlichen geradlinig entlang einer Längsrichtung angeordnet sind und die wenigstens zwei Elementreihen entlang einer quer zur Längsrichtung verlaufenden Querrichtung benachbart zueinander angeordnet sind. In diesem Szenario sind die Erstreckungsrichtung der thermoelektrischen Elemente und die Längsrichtung identisch. Dabei sind die thermoelektrischen Elemente des thermoelektrischen Moduls entlang einer Hochrichtung, die orthogonal sowohl zur Längsrichtung als auch zur Querrichtung verläuft, zwischen einem ersten elektrisch isolierenden Isolationselement und einem zweiten elektrisch isolierenden Isolationselement angeordnet. Das zweite elektrisch isolierende Isolationselement ist in Hochrichtung zwischen den thermoelektrischen Elementen und der Leitungswand der Temperierstruktur angeordnet. Eine derartige Anordnungsgeometrie ermöglicht einen verbesserten thermischen Kontakt mit der zu temperierenden Batteriezelle, insbesondere wenn diese eine im Wesentlichen ebene Gehäusewand aufweist. Diese kann dann entlang der Längsrichtung der Elementreihen mechanisch an der Leitungswand der Temperierstruktur zur Anlage gebracht werden, so dass sich ein optimaler thermischer Kontakt ergibt.

Erfindungsgemäß umfasst das thermoelektrische Modul wenigstens einen Temperatursensor zur Messung der Temperatur der thermisch an das thermoelektrische Modul gekoppelten Batteriezelle.

Dies ermöglicht es insbesondere, die vom Temperatursensor gemessene Temperatur bei der Ansteuerung des wenigstens einen elektrischen Schaltelements zu berücksichtigen. Auf diese Weise lässt sich eine Regelung der Temperatur der Batteriezelle realisieren.

Hierzu umfasst die Temperiereinrichtung eine mit dem wenigstens einen elektrischen Schaltelement sowie mit dem wenigstens einen Temperatursensor zusammenwirkende Steuerungs-/Regelungseinheit. Die Steuerungs-/Regelungseinheit ist derart eingerichtet/programmiert, dass sie das elektrische Schaltelement in Abhängigkeit von der vom Temperatursensor gemessenen Temperatur zwischen dem geöffneten und dem geschlossenen Zustand umschaltet. Der Temperatursensor gestattet somit in Verbindung mit der Steuerungs-/Regelungseinheit eine Regelung der von den thermoelektrischen Elementen der Elementreihen bereitgestellten Heiz- bzw. Kühlleistung in Abhängigkeit von der Temperatur der an diese thermoelektrischen Elemente gekoppelten Batteriezelle. Dies führt zu einer verbesserten, insbesondere besonders homogenen Temperierung der Batteriezelle durch gezieltes Ein- und Ausschalten einzelner Elementreihen mit Hilfe der elektrischen Schaltelemente.

Gemäß einer besonders bevorzugten Ausführungsform kann/können in wenigstens einer Elementreihe, vorzugsweise in wenigstens zwei Elementreihen, besonders bevorzugt in allen Elementreihen, wenigstens Temperatursensor, vorzugsweise wenigstens zwei Temperatursensoren, besonders bevorzugt eine Mehrzahl von Temperatursensoren, zur Messung der Temperatur einer thermisch an die jeweilige Elementreihe des thermoelektrisches Moduls gekoppelten Batteriezelle vorgesehen werden. Gemäß dieser Ausführungsform ist die Steuerungs-/Regelungseinheit auch derart ausgebildet, dass das einer bestimmten Elementreihe zugeordnete elektrische Schaltelement von der Steuerungs-/Regelungseinheit in Abhängigkeit von der Temperatur, die mit dem derselben Elementreihe zugeordneten wenigstens einen Temperatursensor bestimmbar ist, angesteuert wird. Auf diese Weise wird unter Verwendung der bereits erläuterten Steuerungs-/Regelungseinheit eine individuelle Regelung der einzelnen Leitungszweige bzw. Elementreihen mit den zugehörigen thermoelektrischen Elementen realisiert. Dies eröffnet die Möglichkeit, lokale Zonen der Temperierstruktur bezüglich von den thermoelektrischen Elementen der in diesen Zonen bereitgestellten Heiz- oder Kühlleistung individuell anzusteuern. Dadurch lässt sich besonders gut auf die etwaige Ausbildung der bereits erwähnten "Hotspots" reagieren.

In einer besonders bevorzugten Ausführungsform kann das wenigstens eine elektrische Schaltelement einen Halbleiterschalter, insbesondere einen Thyristor, umfassen. Mittels eines solchen Halbleiterschalters lässt sich auf einfache Weise die zur Realisierung der vorangehend erläuterten Temperaturregelung erforderliche Steuerbarkeit des elektrischen Schaltelements sicherstellen. Die Verwendung eines Thyristors empfiehlt sich, da dieser sich in besonderem Maße zur Steuerung hoher elektrische Ströme eignet, wie sie für den Betrieb thermoelektrischer Elemente erforderlich sind.

In einer anderen bevorzugten Ausführungsform kann der Temperatursensor als Infrarotsensor ausgebildet ist, mittels welchem zur Temperaturbestimmung die von der Batteriezelle emittierte Infrarot-Strahlung messbar ist. Dies erlaubt eine besonders genaue Bestimmung der Temperatur.

In einer weiteren bevorzugten Ausführungsform kann das wenigstens eine elektrische Schaltelement auf einer der Temperierstruktur zugewandten Seite des thermoelektrischen Moduls vorgesehen sein. Auf diese Weise kann vermieden werden, dass vom elektrischen Schaltelement betriebsmäßig erzeugte Abwärme die Temperierung der Batteriezelle auf störende Weise beeinflusst.

Erfindungsgemäß ist die Temperierstruktur mit einer an die Elementreihen bzw. an die Leitungszweige angepassten Fluidkanal-Struktur ausgestattet. Erfindungsgemäß ist, dass in der Temperierstruktur für jede Elementreihe ein Fluidkanal vorgesehen ist, und zwar derart, dass jeder Fluidkanal thermisch an die ihm zugeordnete Elementreihe gekoppelt ist. Dabei trennt die wenigstens eine Leitungswand der Temperierstruktur den jeweiligen Fluidkanal von der ihm zugeordneten Elementreihe. Weiterhin ist in wenigstens einem Fluidkanal, vorzugsweise in allen Fluidkanälen, ein Ventilelement vorgesehen, welches zwischen einer geschlossenen Position, in welcher es den Fluidkanal verschließt, und einer geöffneten Position, in welcher es den Fluidkanal zum Durchströmen mit dem Fluid freigibt, verstellbar ist. Dies erlaubt es, die mittels des betreffenden Fluidkanals bewirkte Temperier-Wirkung auf flexible Weise zu variieren. Handelt es sich bei dem durch den Fluidkanal strömenden Fluid etwa um ein Kühlmittel, so kann durch ein Verschließen des Fluidkanals die vom Fluid erzeugte Kühlwirkung lokal im Bereich dieses Fluidkanals drastisch reduziert werden. Durch ein Verstellen des Ventilelements in seine geöffnete Position wird die vom Fluid bereitstellbare Kühlleistung hingegen maximiert. Dies ermöglicht es insbesondere, auf die bereits erläuterten "Hotspots" in der zu kühlenden Batteriezelle zu reagieren.

Das hier vorgestellte Konzept eines "schaltbaren" Fluidkanals mit einstellbarer Fluid-Durchflussmenge entfaltet seine vorteilhafte Wirkung daher in besonderem Maße dann, wenn möglichst viele, besonders bevorzugt alle Fluidkanäle mit einem verstellbaren Ventilelement ausgestattet werden.

Erfindungsgemäß ist in derjenigen Elementreihe, welche dem ein Ventilelement aufweisender Fluidkanal zugeordnet ist, ein mit dem Ventilelement zusammenwirkendes elektrisches Aktuatorelement vorgesehen, welches elektrisch mit den wenigstens zwei thermoelektrischen Elementen dieser Elementreihe verbunden ist. Das elektrische Aktuatorelement weist dabei zwei Betriebszustände auf und wirkt derart mit dem Ventilelement des entsprechenden Fluidkanals zusammen, dass es das Ventilelement in einem ersten Betriebszustand in die geöffnete Position verstellt und in einem zweiten Betriebszustand in die geschlossenen Position verstellt, oder umgekehrt. Eine solche Konfiguration erlaubt es, die thermoelektrischen Elemente einer bestimmten Elementreihe mit dem Ventilelement des dieser Elementreihe zugeordneten Fluidkanals zu koppeln. Somit lässt sich auch die von den thermoelektrischen Elementen erzeugte Heiz- oder Kühlleistung mit der vom durch den Fluidkanal strömenden Fluid erzeugten Heiz- bzw. Kühlleistung auf vorteilhafte Weise koppeln. Auch die oben erläuterte Temperaturregelung durch Ein- und Ausschalten einzelner Elementreihen thermoelektrischer Elemente lässt sich auf diese Weise auf die mit einem Fluid durchströmbare Fluidkanäle übertragen. Ein Umschalten eines elektrischen Schaltelements in die geöffnete Position hat dann nicht nur zur Folge, dass die thermoelektrischen Elemente der betroffenen thermoelektrischen Elemente nicht mehr zur Temperierung der Batteriezelle beitragen, sondern dass durch ein mit dem Öffnen des Schaltelements verbundenes Umschalten des zugeordneten Ventilelements in die geschlossene Position gleichzeitig auch der entsprechende Fluidkanal geschlossen wird. Somit kann auch der Fluidkanal nicht mehr zur Temperierung der Batteriezelle beitragen. Umgekehrt bewirkt ein Umschalten des elektrischen Schaltelements in die geschlossene Position, dass elektrischer Strom durch die thermoelektrischen Elemente strömt, so dass diese zur Temperierung der Batteriezelle beitragen. Gleichzeitig kann das Umschalten des elektrischen Schaltelements in die geschlossene Position auch ein Verstellen des Ventilelements in die geöffnete Position bewirken, so dass ein Fluid durch den Fluidkanal strömen und zur Temperierung der Batteriezelle beitragen kann.

In einer vorteilhaften Weiterbildung kann das elektrische Aktuatorelement ein elektrisch in Reihe zu den wenigstens zwei thermoelektrischen Elementen geschaltetes Spulenelement umfassen, das im ersten Betriebszustand von elektrischem Strom durchflossen wird, nicht jedoch im zweiten Betriebszustand. Im ersten Betriebszustand kann somit vom durch das elektrische Spulenelement strömenden elektrischen Strom ein magnetisches Feld erzeugt werden, welches durch magnetische Wechselwirkung mit dem Ventilelement dessen Verstellung zwischen der geöffneten und der geschlossenen Position bewirkt.

Besonders zweckmäßig kann das elektrische Aktuatorelement derart ausgebildet sein, dass es kontaktfrei mit dem Ventilelement zum Verstellen zwischen der geöffneten und der geschlossenen Position zusammenwirkt. Dies mag vorzugsweise über die bereits erwähnte magnetische Kopplung erfolgen, wenn das Ventilelement mit einer magnetischen Komponente, etwa einem magnetisierten Bauteil versehen wird, welches mit dem vom elektrischen Spulenelement erzeugten Magnetfeld wechselwirkt.

In einer bevorzugten Ausführungsform kann das Ventilelement ein federelastisches Element, insbesondere eine Blattfeder, umfassen, welches gegen die geöffnete oder gegen die geschlossene Position vorgespannt ist. Ein solches federelastisches Element ist fertigungstechnisch einfach herzustellen und beansprucht nur wenig Bauraum, so dass es platzsparend in der Temperierstruktur verbaut werden kann. Darüber hinaus ist es auch kostengünstig herzustellen, was zu reduzierten Fertigungskosten der gesamten Temperiereinrichtung führt, insbesondere wenn mehrere solche federelastische Elemente verbaut werden sollen. Die hier vorgeschlagene Vorspannung des federelastischen Elements gegen die geöffnete oder geschlossene Position erlaubt es darüber hinaus, ein dem Fachmann als "Fail-Safe-Funktion" geläufiges Wirkprinzip zu realisieren. Alternativ dazu ist auch eine Ausbildung als Mikroventil vorstellbar.

Bei einer weiteren bevorzugten Ausführungsform ist das Aktuatorelement elektrisch zwischen zwei thermoelektrischen Elementen angeordnet. Auf diese Weise kann der benötigte Bauraum für die Unterbringung des jeweiligen Aktuatorelements klein gehalten werden.

Besonders zweckmäßig kann das Ventilelement, insbesondere entlang der Erstreckungsrichtung, im Bereich eines Aktuatorelements angeordnet sein. Auf diese Weise lässt sich besonders effektiv die gewünschte Kopplung zwischen Ventilelement und Aktuatorelement realisieren.

Besonders bevorzugt kann auch das elektrische Schaltelement elektrisch zwischen zwei thermoelektrischen Elementen angeordnet sein. Auf diese Weise kann der elektrische Verdrahtungsaufwand für die thermoelektrischen Elemente gering gehalten werden.

Besonders zweckmäßig kann die Temperierstruktur als Flachrohr ausgebildet sein, in welcher die wenigstens zwei Fluidkanäle vorgesehen sind und welches mit einer dem thermoelektrischen Modul zugewandten Seite flächig an diesem anliegt. Dies führt zu einem vorteilhaften, großflächigen thermischen Kontakt der Fluidkanäle des Flachrohrs mit dem thermoelektrischen Modul bei gleichzeitig geringem Bauraumbedarf. Gemäß dieser Variante können sich die wenigstens zwei Fluidkanäle und die thermoelektrischen Elemente der Elementreihen jeweils entlang der bereits eingeführten Erstreckungsrichtung erstrecken. Bezüglich der ebenfalls bereits eingeführten Hochrichtung, die orthogonal sowohl zur Erstreckungsrichtung als auch zur Querrichtung verläuft, kann sich jeder Fluidkanal somit im Abstand zur ihm zugeordneten Elementreihe und parallel zu dieser erstrecken.

Die Erfindung betrifft ferner eine Batterie-Anordnung mit einer vorangehend vorgestellten thermoelektrischen Vorrichtung. Die Batterie-Anordnung umfasst ferner eine wenigstens eine Batteriezelle aufweisende Batterie. Die wenigstens eine Batteriezelle ist dabei auf einer der Temperierstruktur abgewandten Seite des thermoelektrischen Moduls an diesem angeordnet. Auf diese Weise lässt sich eine wirksame thermische Ankopplung der wenigstens eine Batteriezelle sowohl an die thermoelektrischen Elemente als auch an die Temperierstruktur der Temperiereinrichtung erzielen.

In einer besonders bevorzugten Ausführungsform kann für jede zu temperierende Batteriezelle ein individuelles thermoelektrisches Modul vorgesehen sein. Mittels eines solchen modularen Aufbaus der thermoelektrischen Vorrichtung lässt sich diese auf flexible Weise zur Temperierung einer prinzipiell beliebigen Anzahl von Batteriezellen heranziehen. Gemäß dieser Ausführungsform umfasst die Batterie-Anordnung daher ein erstes und wenigstens ein zweites thermoelektrischen Modul. Entsprechend umfasst die zu temperierende Batterie eine erste und wenigstens eine zweite Batteriezelle. Zur thermischen Ankopplung an das jeweilige thermoelektrische Modul kann eine Gehäusewand des Gehäuses einer jeweiligen Batteriezelle mechanisch und somit auch thermisch mit der Leitungswand der Temperierstruktur des entsprechenden thermoelektrischen Moduls verbunden werden.

Wie bereits erwähnt, erlaubt das vorangehend vorgestellte modulare Konzept die Temperierung einer Batterie mit einer prinzipiell beliebigen Anzahl an Batteriezellen. In einer bevorzugten Ausführungsform der hier vorgestellten Batterie-Anordnung umfasst die Batterie daher eine Mehrzahl von Batteriezellen. Dabei ist für jede Batteriezelle jeweils genau ein thermoelektrisches Modul vorgesehen, welches mechanisch und somit auch thermisch mit dieser Batteriezelle verbunden ist.

Gemäß einer besonders vorteilhaften Ausführungsform der hier vorgestellten Batterie-Anordnung kann für jedes Paar aus einer Batteriezelle und thermoelektrischen Modul jeweils wenigstens ein individueller Temperatursensor vorgesehen werden. Dies ermöglicht eine individuelle Temperierung der einzelnen Batteriezellen durch das ihnen zugeordnete thermoelektrische Modul und unter Verwendung der oben vorgestellten gemeinsamen Steuerungs-/Regelungseinheit.

In einer vorteilhaften Weiterbildung empfiehlt sich daher die Ausbildung der Steuerungs-/Regelungseinheit derart, dass diese die elektrischen Schaltelemente eines jeweiligen thermoelektrischen Moduls in Abhängigkeit von der Temperatur, die von dem diesem Modul zugeordneten wenigstens einen Temperatursensor bestimmbar ist, zwischen ihrem geschlossenen und geöffneten Zustand umschaltet. Dies erlaubt ein Ein- und Ausschalten der entsprechenden Elementreihen und Fluidkanäle in Abhängigkeit von der gemessenen Temperatur.

In einer anderen bevorzugten Ausführungsform kann zwischen der wenigstens einen Batteriezelle und der Temperierstruktur eine elektrisch isolierende Adapterschicht aus einem wärmeleitenden Material, insbesondere aus einem Klebstoff vorgesehen sein, an welcher sowohl die wenigstens eine Batteriezelle zur Wärmeübertragung als auch die Temperierstruktur zur thermischen Kopplung der wenigstens einen Batteriezelle an das Temperierstruktur anliegt. Auf diese Weise können unerwünschte Zwischenräume zwischen dem Gehäuse der zu temperierenden Batteriezelle und dem thermoelektrischen Modul, die typischerweise mit einer verminderten thermischen Kopplung einhergehen, vermieden werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Beispiel einer erfindungsgemäßen Temperiereinrichtung zum Temperieren in einem Längsschnitt entlang der Schnittlinie I-I der Figur 2,
- Fig. 2: die Temperiereinrichtung der Figur 1 in einem Querschnitt entlang der Schnittlinie II-II der Figur 1,
- Fig.3: die Temperiereinrichtung der Figur 1 in einem Querschnitt entlang der Schnittlinie III-III der Figur 2,
- Fig. 4: eine erfindungsgemäße Batterie-Anordnung mit zwölf zu temperierenden Batteriezellen entlang einer Schnittlinie IV-IV der Figur 5,
- Fig. 5: die Batterie-Anordnung der Figur 4 in einem Querschnitt entlang der Schnittlinie V-V der Figur 4,
- Fig. 6: eine Detaildarstellung der Figur 4 im Bereich dreier benachbarter Batteriezellen bzw. dreier benachbarter thermoelektrischer Module.

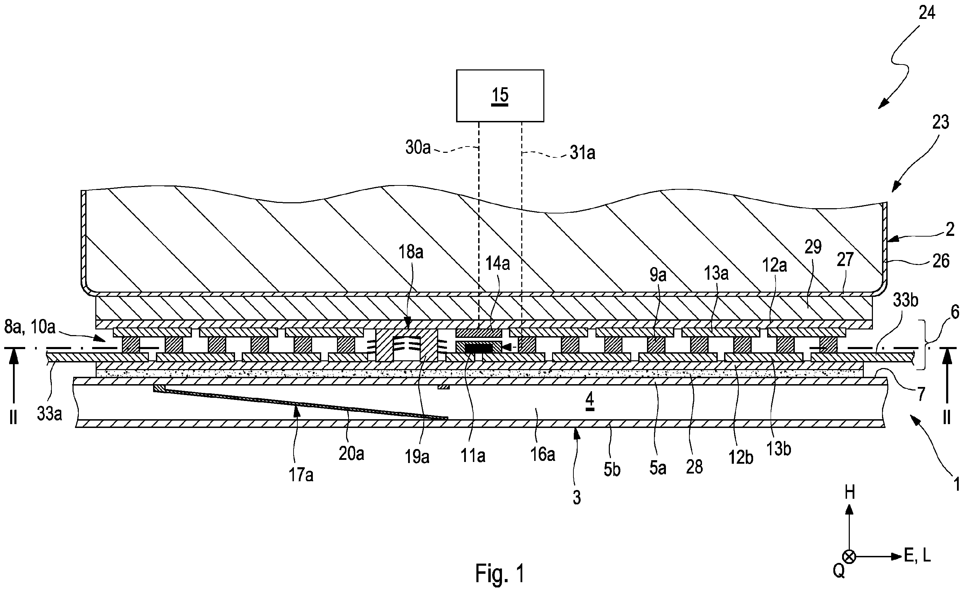

Figur 1 illustriert ein Beispiel einer erfindungsgemäßen Temperiereinrichtung 1 zum Temperieren in einem Längsschnitt. Die Temperiereinrichtung 1 dient zum Temperieren wenigstens einer elektrochemischen Energieversorgungseinheit in Form einer Batterie 23 mit wenigstens einer Batteriezelle 2. Die Temperiereinrichtung 1 umfasst eine von einem Fluid durchströmbare Temperierstruktur 3, deren Innenraum 4 von einer ersten und zweiten Leitungswand 5a, 5b begrenzt wird. Im Beispiel der Figur 1 liegen die Leitungswände 5a, 5b einander gegenüber. Die Temperiereinrichtung 1 umfasst ferner ein thermoelektrisches Modul 6, welches auf einer vom Innenraum 4 der Temperierstruktur 3 abgewandten Seite 7 an der ersten Leitungswand 5a der Temperierstruktur 3 angeordnet ist. Das thermoelektrische Modul 6 kann mittels einer Kontaktschicht 28 aus einem thermisch leitfähigen Kleber an der Temperierstruktur 3 befestigt sein.

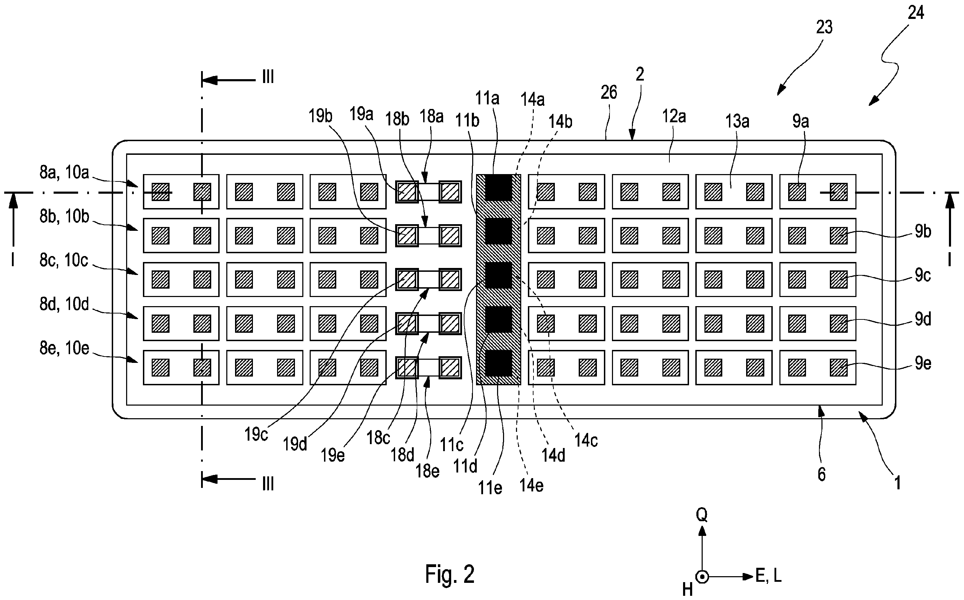

Die Figur 2 zeigt die Temperiereinrichtung 1 der Figur 1 in einem Querschnitt entlang der Schnittlinie II-II der Figur 1. Man erkennt, dass das thermoelektrische Modul 6 - rein exemplarisch - fünf Elementreihen 8a-8e mit jeweils mehreren thermoelektrischen Elementen 9a-9e aufweist. Der Aufbau der thermoelektrischen Elemente 9a-9e, die ein thermoelektrisch aktives Material umfassen, ist dem einschlägigen Fachmann bekannt, so dass die thermoelektrischen Elemente 9a-9e in Figur 1 nur grobschematisch skizziert sind.

Die einzelnen Elementreihen 8a-8e erstrecken sich jeweils entlang einer gemeinsamen Erstreckungsrichtung E. Die thermoelektrischen Elemente 9a-9e einer jeden Elementreihe 8a-8e sind zur Ausbildung eines jeweiligen elektrischen Leitungszweigs 10a-10e elektrisch zueinander in Reihe geschaltet. Mit anderen Worten, die thermoelektrischen Elemente 9a der ersten Elementreihe 8a bilden einen ersten elektrischen Leitungszweig 10a, die thermoelektrischen Elemente 9b der zweiten Elementreihe 8b bilden einen zweiten elektrischen Leitungszweig 10b usw. Die einzelnen Elementreihen 8a-8e bzw. Leitungszweige 10a-10e können wie in Figur 1 gezeigt mittels elektrischer Anschlusselemente 33a, 33b elektrisch parallel zueinander geschaltet werden. Über die elektrischen Anschlusselemente 33a, 33b können die Elementreihen 8a-8e auch mit einer externen elektrischen Energiequelle (nicht gezeigt) verbunden werden. Der Figur 2 entnimmt man, dass die thermoelektrischen Elemente 9a-9e einer jeden Elementreihe 8a-8e im Wesentlichen geradlinig entlang einer Längsrichtung L und bezüglich einer orthogonal zur Längsrichtung verlaufenden Querrichtung Q benachbart zueinander angeordnet sind.

Betrachtet man nun wieder die Figur 1, so erkennt man, dass das in dem in Figur 1 gezeigten ersten Leitungszweig 10a ein erstes elektrisches Schaltelement 11a vorgesehen ist, welches zu den thermoelektrischen Elementen 9a elektrisch in Reihe geschaltet ist. Solche elektrischen Schaltelemente 11b bis 11e können auch - wie in Figur 2 dargestellt - in den anderen Elementreihen 8b-8e vorgesehen sein. In vereinfachten Varianten des Beispiels werden nur einzelne Elementreihen 8a-8e mit einem elektrischen Schaltelement 11a-11e ausgestattet.

Besonders bevorzugt ist das jeweilige elektrische Schaltelement 11a-11e elektrisch zwischen zwei thermoelektrischen Elementen 9a-9e angeordnet. Auf diese Weise kann der erforderliche elektrische Verdrahtungsaufwand für die thermoelektrischen Elemente 9a-9e gering gehalten werden.

Die elektrischen Schaltelemente 11a-11e sind jeweils zwischen einem geschlossenen und einem geöffneten Zustand umschaltbar, d.h. die elektrischen Schaltelemente 11a-11e folgen dem Wirkprinzip eines elektrischen Schalters. Im geschlossenen Zustand können die thermoelektrischen Elemente 9a-9e der zugehörigen Elementreihe 8a-8e von einem elektrischen Strom aus einer externen Energiequelle (nicht gezeigt) durchströmt werden, im geöffneten Zustand ist dies nicht möglich.

Die Figur 1 zeigt, dass die thermoelektrischen Elemente 9a-9e einer jeden Elementreihe 8a-8e entlang einer Hochrichtung H, die orthogonal zur Längsrichtung L und zur Querrichtung Q verläuft, sandwichartig zwischen einem ersten elektrisch isolierenden Isolationselement 12a und einem zweiten elektrisch isolierenden Isolationselement 12b angeordnet sind. Dabei ist das zweite Isolationselement 12b in Hochrichtung H zwischen den thermoelektrischen Elementen 9a-9e und der ersten Leitungswand 5a der Temperierstruktur 3 angeordnet. Im Beispiel der Figuren erstrecken sich die Erstreckungsrichtung E und die Längsrichtung L parallel zueinander. Denkbar sind aber auch Varianten, bei welchen die Erstreckungsrichtung E entlang einer Elementreihe 8a-8e in unterschiedliche Richtungen weist, also variiert.

Bei den beiden Isolationselementen 12a, 12b kann es sich um herkömmliche Platinen handeln, in welchen, beispielsweise mittels eines herkömmlichen Ätzprozesses, Leiterbahnen in Form von Kupferbrücken 13a, 13b ausgebildet sind. Diese sind derart auf den den thermoelektrischen Elementen 9a-9e zugewandten Seiten der Isolationselemente 12a, 12b positioniert, dass sie entlang der Erstreckungsrichtung E benachbarte thermoelektrische Elemente 9a-9e desselben Leitungszweigs 10a-10e elektrisch miteinander verbinden (vgl. Fig. 1). Solche Platinen können eine oder mehrere, glasfaserverstärkte Kunststoffschicht(en) umfassen. Die einzelnen Kunststoffschichten der Platine können jeweils Schichtdicken zwischen 50µm und 300µm aufweisen, so dass eine gute Wärmeleitfähigkeit der elektrischen Isolationselemente 12a, 12b sichergestellt ist, ohne dass die gegenüber der Batteriezelle erforderliche elektrische Isolierung gefährdet wäre.

Um eine gute Wärmeankopplung der Batteriezelle 2 an das thermoelektrische Modul 6 zu erzielen, kann zwischen dem ersten Isolationselement 12a und der zu temperierenden Batteriezelle 2 eine Adapterschicht 29 vorgesehen werden, die ein wärmeleitendes und/oder elektrisch isolierendes Material umfasst. Denkbar ist beispielsweise die Verwendung eines thermoplastischen Kunststoffs oder einer Folie aus einem Kunststoff. Bei geeigneter Dimensionierung der Adapterschicht 29 kann verhindert werden, dass sich zwischen dem ersten Isolationselement 12a und der zu temperierenden Batteriezelle 2 unerwünschte Zwischenräume ausbilden können, die die thermische Ankopplung der Batteriezelle 2 an das thermoelektrische Modul 6 mindern.

Entsprechend Figur 1 können die elektrischen Schaltelemente 11a-11e auf einer der Temperierstruktur 3 zugewandten Seite des thermoelektrischen Moduls 6 vorgesehen sein. Auf diese Weise kann weitgehend oder sogar vollständig verhindert werden, dass von den elektrischen Schaltelementen 11a-11e betriebsmäßig erzeugte Abwärme die Temperierung der Batteriezelle 2 stört.

Das thermoelektrische Modul 1 umfasst auch Temperatursensoren 14a-14e zur Messung der Temperatur der thermisch an das thermoelektrische Modul 6 gekoppelten Batteriezelle 2. Im Beispielszenario der Figur 2 ist in jeder Elementreihe 8a-8e ein solcher Temperatursensor 14a-14e vorgesehen. In vereinfachten Varianten kann aber auch in einer oder mehreren Elementreihen 8a-8e auf solche Temperatursensoren 14a-14e verzichtet sein. Umgekehrt ist es hingegen auch denkbar, in den einzelnen Elementreihen 8a-8e mehr als nur einen Temperatursensor 14a-14e anzuordnen. In diesem Fall kann sich eine matrixartige Anordnung der Temperatursensoren 14a-14e sinnvoll sein, um die Temperatur ortsaufgelöst bestimmen zu können. Grundsätzlich gilt dabei, dass mit zunehmender Anzahl an Temperatursensoren 14a-14e die Ortsauflösung der mittels der Temperatursensoren 14a-14e ermöglichten Temperaturbestimmung erhöht werden kann.

Die Temperatursensoren 14a-14e können als herkömmliche Temperatursensoren wie beispielsweise PTC-Sensoren, die auf einer elektrischen Widerstandsmessung basieren, ausgebildet sein. Alternativ dazu können sie aber auch als Infrarotsensoren ausgebildet sein, mittels welchen zur Temperaturbestimmung die von der Batteriezelle 2 emittierte Infrarot-Strahlung gemessen werden kann.

Weiterhin umfasst die Temperiereinrichtung 1 eine sowohl mit den Temperatursensoren 14a-14e als auch mit den Schaltelementen 11a-11e zusammenwirkenden Steuerungs-/Regelungseinheit 15, die in Figur 1 grobschematisch dargestellt ist, auf deren Darstellung aus Gründen der Übersichtlichkeit in Figur 2 jedoch verzichtet wurde. Die Steuerungs-/Regelungseinheit 15 ist derart eingerichtet/programmiert, dass sie sie die elektrischen Schaltelemente 11a-11ejeweils in Abhängigkeit von der vom Temperatursensor 14a-14ederselben Elementreihe 8a-8e gemessenen Temperatur zwischen dem geöffneten und dem geschlossenen Zustand umschaltet. Hierzu sind die Temperatursensoren 14a-14e über geeignete Signalleitungen - in Figur 1 ist aus Gründen der Übersichtlichkeit nur die dem Temperatursensor 14a zugeordnete Signalleitung 30a gezeigt - mit der Steuerungs-/Regelungseinheit 15 verbunden, so dass der vom Temperatursensor 14a gemessene, aktuelle Temperaturwert an die Steuerungs-/Regelungseinheit 15 übermittelt werden kann.

Zur Ansteuerung der elektrische Schaltelemente 11a-11e führen geeignete elektrische Steuerleitungen - erneut zeigt Figur 1 der Übersichtlichkeit halber nur eine solche Steuerleitung 31a - von der Steuerungs-/Regelungseinheit 15 zum elektrischen Schaltelement 11a-11e. Die Regelung der von der Temperiereinrichtung 1 bewirkten Temperierung kann beispielsweise derart erfolgen, dass die Steuerungs-/Regelungseinheit 15 ein oder mehrere Schaltelemente 11a-11e in den geschlossenen Zustand umschaltet, in welchem die thermoelektrischen Elemente zur Temperierung der Batteriezelle 2 beitragen, sobald die vom Temperatursensor 14a-14e gemessene Temperatur einen vorbestimmten ersten Schwellwert überschreitet und wieder in den geöffneten Zustand umgeschaltet wird, indem die thermoelektrischen Elemente 9a-9e abgeschaltet sind und nicht zur Kühlung der Batteriezelle 2 beitragen, sobald die vom Temperatursensor 14a-14e gemessene Temperatur einen zweiten Schwellwert unterschreitet. Der zweite Schwellwert kann dabei gleich dem ersten Schwellwert sein oder zur Realisierung einer Hysterese-Kurve kleiner als der erste Schwellwert sein. Die Steuerungs-/Regelungseinrichtung 15 kann derart eingerichtet/programmiert sein, dass für die Temperatursensoren 14a-14e einer bestimmten Elementreihe 8a-8e - im einfachsten Fall einem einzigen Temperatursensor 14a-14e pro Elementreihe 8a-8e - und dem diesen Temperatursensoren 14a-14e zugeordneten elektrischen Schaltelement 11a-11e eine individuelle Temperaturregelung durchgeführt wird. Die Temperatursensoren 14a-14e gestatten in Verbindung mit der gemeinsamen Steuerungs-/Regelungseinheit 15 und den elektrischen Schaltelementen 11a-11e eine Regelung der von den in den Leitungszweigen 10a-10e angeordneten thermoelektrischen Elementen 9a-9e bereitgestellten Heiz- bzw. Kühlleistung in Abhängigkeit von der Temperatur der an diese thermoelektrischen Elemente 9a-9e gekoppelten Batteriezelle 2. Dies führt zu einer verbesserten, homogenisierten Temperierung der Batteriezellen 2 der Batterie 23 durch die thermoelektrischen Elemente 9a-9e.

Die elektrischen Schaltelemente 11a-11e können einen Halbleiterschalter, insbesondere einen Thyristor, umfassen. Mittels eines solchen Halbleiterschalters lässt sich auf einfache Weise die zur Realisierung der vorangehend erläuterten Temperaturregelung erforderliche Steuerbarkeit des elektrischen Schaltelements durch die Steuerungs-/Regelungseinheit 15 sicherstellen. Die Verwendung eines Thyristors empfiehlt sich, da dieser sich in besonderem Maße zur Steuerung hoher elektrische Ströme eignet, die zum Betrieb thermoelektrischer Elemente 9a-9e erforderlich sind.

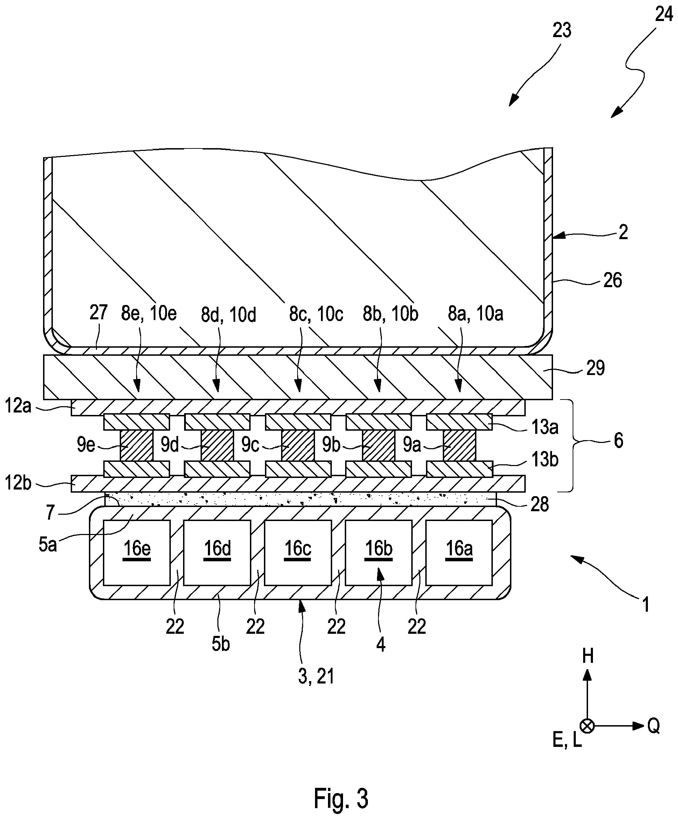

Die Figur 3 zeigt die Temperiereinrichtung 1 in einem Querschnitt entlang der Schnittlinie III-III der Figur 2. Wie die Figur 3 anschaulich belegt, ist im Innenraum 4 der Temperierstruktur 3 nicht nur ein einziger Fluidkanal 16a ausgebildet, sondern für jede Elementreihe 8a-8e ein individueller Fluidkanal 16a-16e vorgesehen. Die Anordnung der Fluidkanäle 16a-16e in der Temperierstruktur 3 erfolgt derart, dass jeder Fluidkanal 16a-16e thermisch an eine ihm zugeordnete Elementreihe 8a-8e gekoppelt ist.

Besonders zweckmäßig kann die Temperierstruktur 3 wie in Figur 3 gezeigt als Flachrohr 21 ausgebildet sein, in welchem die Fluidkanäle 16a-16e mittels geeigneter Trennwände 22 ausgebildet und fluidisch voneinander getrennt sind. Die erste Leitungswand 5a liegt dabei mit ihrer dem thermoelektrischen Modul 6 zugewandten Seite 7 flächig am zweiten Isolationselement 12b an. Zwischen dem als Platine realisierten zweiten elektrischen Isolationselement 12b und der ersten Leitungswand 5a kann eine Kontaktschicht 28 aus einem wärmeleitenden Klebstoff vorgesehen sein. Dies führt zu einem großflächigen thermischen Kontakt der Fluidkanäle 16a-16e des Flachrohrs 21 mit dem thermoelektrischen Modul 6.

Wie Figur 3 weiter erkennen lässt, erstrecken sich die Fluidkanäle 16a-16e und die thermoelektrischen Elemente 9a-9e der Elementreihen 8a-8e jeweils entlang der bereits eingeführten Erstreckungsrichtung E, die im Beispielszenario identisch zur Längsrichtung L ist. Bezüglich der ebenfalls bereits definierten Hochrichtung H, die orthogonal sowohl zur Erstreckungsrichtung E bzw. Längsrichtung L als auch zur Querrichtung Q verläuft, verläuft jeder Fluidkanal 16a-16e somit im Abstand zur ihm zugeordneten Elementreihe 8a-8e und parallel zu dieser.

Betrachtet man nun wieder Figur 1, in welcher lediglich der der ersten Elementreihe 8a zugeordnete Fluidkanal 16a gezeigt ist, so erkennt man, dass im Fluidkanal 8a ein Ventilelement 17a vorgesehen ist. Dieses ist zwischen einer in Figur 1 gezeigten geschlossenen Position, in welcher es den Fluidkanal 17a verschließt, und einer geöffneten Position (nicht gezeigt), in welcher es den Fluidkanal 16a zum Durchströmen mit dem Fluid freigibt, umschaltbar.

Entsprechend Figur 1 ist in derjenigen Elementreihe 8a, welche dem das Ventilelement 17a aufweisenden Fluidkanal 16a zugeordnet ist, auch ein mit diesem Ventilelement 17a zusammenwirkendes elektrisches Aktuatorelement 18a vorgesehen. Dieses ist wiederum elektrisch mit den thermoelektrischen Elementen 9a der Elementreihe 8a verbunden. Besonders bevorzugt ist das Aktuatorelement 18a-18e elektrisch zwischen zwei thermoelektrischen Elementen 9a-9e angeordnet, also elektrisch zwischen zwei thermoelektrischen Elementen 9a-9e in Reihe geschaltet. Auf diese Weise kann der benötigte Bauraum für die Unterbringung des jeweiligen Aktuatorelements 18a-18e klein gehalten werden.

Das elektrische Aktuatorelement 18a weist zwei Betriebszustände auf und wirkt derart mit dem Ventilelement 17a zusammen, dass es 17a in einem ersten Betriebszustand das Ventilelement 17a in die geöffnete Position verstellt. Entsprechend verstellt das Aktuatorelement 18a das Ventilelement 17a in einem zweiten Betriebszustand in die geschlossenen Position. Hierzu kann das Aktuatorelement 18a beispielsweise ein in Figur 1 nur grobschematisch skizziertes elektrisches Spulenelement 19a umfassen, das elektrisch in Reihe zu den thermoelektrischen Elementen 9a der Elementreihe 8a geschaltet und in seinem ersten Betriebszustand von elektrischem Strom, welcher auch durch die thermoelektrischen Elemente 9a strömt, durchströmt wird, nicht jedoch in seinem zweiten Betriebszustand. In einer Variante kann auch ein umgekehrter Zusammenhang zwischen den beiden Betriebszuständen des Aktuatorelements 18a und den beiden Positionen des dem Aktuatorelement 18a zugeordneten Ventilelements 17a realisiert sein.

Ein solches Zusammenwirken von Aktuatorelement 18a und Ventilelement 17a ermöglicht es, die thermoelektrischen Elemente 9a der Elementreihe 8a mit dem Ventilelement 17a des dieser Elementreihe 8a zugeordneten Fluidkanals 16a zu koppeln. Somit lässt sich auch die von den thermoelektrischen Elementen 9a erzeugte Heiz- oder Kühlleistung mit der vom durch den Fluidkanal 16a strömenden Fluid erzeugten Heiz- bzw. Kühlleistung koppeln.

Das Umschalten des Aktuatorelements 18a zwischen seinen beiden Betriebszuständen erfolgt indirekt durch Umschalten des elektrischen Schaltelements 11a. Somit kann der mittels des Ventilelements 17a "zuschaltbare" Fluidkanal 16a in die oben erläuterte Temperaturregelung miteinbezogen werden. Im geschlossenen Zustand des elektrischen Schaltelements 11a ist ein elektrischer Stromfluss durch die thermoelektrischen Elemente 9a und somit auch durch das elektrische Aktuatorelement 18a möglich. Das elektrische Aktuatorelement 18a befindet sich dann in seinem ersten Betriebszustand, in welchem es ein Verstellen des Ventilelements 17a in die geöffnete Position bewirkt.

Wird das elektrische Schaltelement 11a in den geöffneten Zustand umgeschaltet, so führt dies zu einer Unterbrechung des elektrischen Stromflusses durch die thermoelektrischen Elemente 9a der Elementreihe 8a und auch durch das elektrische Aktuatorelement 18a, so dass dieses in seinen ersten Betriebszustand geschaltet wird. In der Folge wird auch das Ventilelement 17a in den geschlossenen Zustand umgeschaltet, in welchem ein Durchströmen des Fluidkanals 16a durch ein Fluid verhindert wird.

Die mit dem ersten Betriebszustand des Aktuatorelements 18a einhergehende Öffnung des Fluidkanals 16a durch das Ventilelement 17a kann im Falle der im Beispiel gezeigten Ausbildung des Aktuatorelements 18a als elektrisches Spulenelement 19a wie folgt erfolgen: Durch den elektrischen Stromfluss durch das Spulenelement 19a wird ein magnetisches Feld erzeugt, welches wiederum ein Verstellen des Ventilelements 17a in die geöffnete Position bewirkt. Hierzu kann das Ventilelement 17a ein federelastisches Element 20a in Form einer Blattfeder umfassen, welches gegen die geschlossene Position vorgespannt ist. Besitzt das federelastische Element 20a magnetische Eigenschaften, so wird das federelastische Element 20a mit Hilfe des vom Aktuatorelement 18a erzeugten Magnetfelds in die geöffnete Position bewegt.

Ein Abschalten des elektrischen Stroms mittels des Aktuatorelements 18a durch Öffnen des elektrischen Schaltelements 11a hat auch ein Abschalten des vom Spulenelement 19a erzeugten Magnetfelds zur Folge. Das vorgespannte federelastische Element bewegt sich dann wieder in die geschlossene Position zurück, in welcher es den Fluidkanal 16a verschließt.

Selbstverständlich ist in einer Variante des Beispiels auch eine Vorspannung des federelastischen Elements 20a in die geöffnete Position denkbar.

Im vorangehend vorgestellten Szenario ist das elektrische Aktuatorelement 18a derart ausgebildet, dass es mittels magnetischer Kopplung kontaktfrei mit dem Ventilelement 17a zum Verstellen zwischen der geöffneten und der geschlossenen Position zusammenwirkt.

Alternativ zur Ausbildung als federelastisches Element 20a ist es auch vorstellbar, das Ventilelement 17a in Form eines Mikroventils zu realisieren, welches dann elektrisch mit dem Aktuatorelement 18a gekoppelt wird.

Vorzugsweise ist das Ventilelement 17a-17e, insbesondere entlang der Erstreckungsrichtung E, im Bereich eines jeweiligen Aktuatorelements 18a-18e angeordnet. Auf diese Weise lässt sich besonders effektiv die gewünschte die Kopplung zwischen Ventilelement und Aktuatorelement realisieren.

Das vorangehend erläuterte Zusammenwirken von elektrischem Schaltelement 11a, elektrischem Aktuatorelement 18a und Ventilelement 17a ist im Rahmen der hier vorgestellten Erfindung nicht nur auf die erste Elementreihe 8a und auf den dieser Elementreihe 8a zugeordneten Fluidkanal 16a beschränkt; vielmehr erweist es sich als vorteilhaft, wenigstens zwei - besonders bevorzugt alle - Elementreihen 8a-8e mit entsprechenden Aktuatorelementen 18a-18e, beispielsweise in Form elektrischer Spulenelemente 19a-e versehen werden und in den entsprechenden Fluidkanälen 16a-16e auch jeweilige Ventilelemente 17a-17e, beispielsweise in Form federelastischer Bauelemente 20a-20e, vorgesehen werden. Mit anderen Worten: Obige Erläuterungen zur ersten Elementreihe 18a und dem zugeordneten Fluidkanal 16a geltend mutatis mutandis auch für die verbleibenden Elementreihen 8b-8e sowie die entsprechenden Fluidkanäle 16b-16e.

Die vorangehend vorgestellte Temperiereinrichtung 1 eignet sich auch zur Temperierung einer Batterie 23 mit mehr als einer einzigen Batteriezelle 2. Die Temperiereinrichtung 1 und wenigstens zwei Batteriezellen 2 als Teil einer Batterie 23 mit bilden eine Batterie-Anordnung 24.

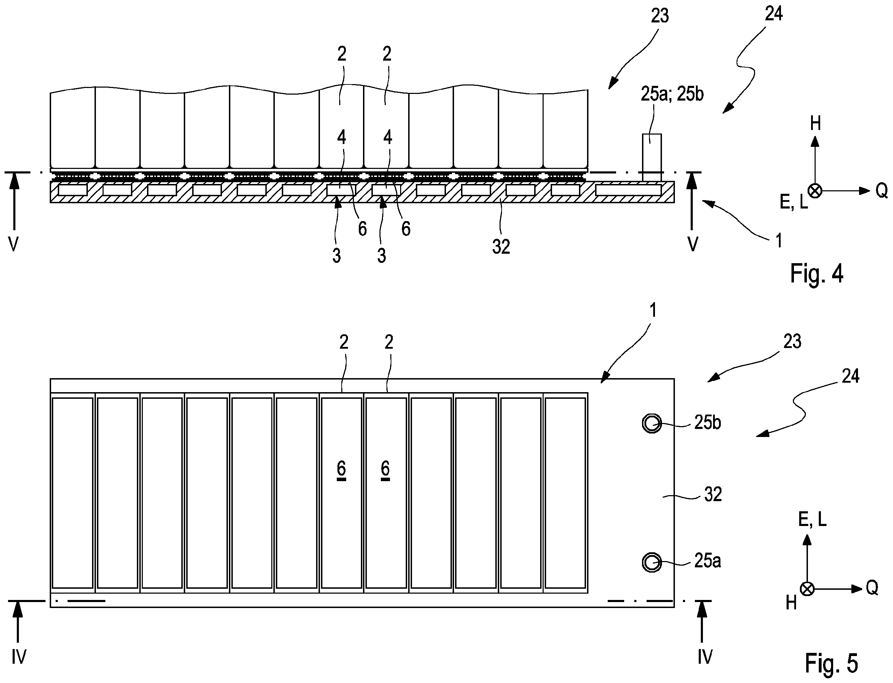

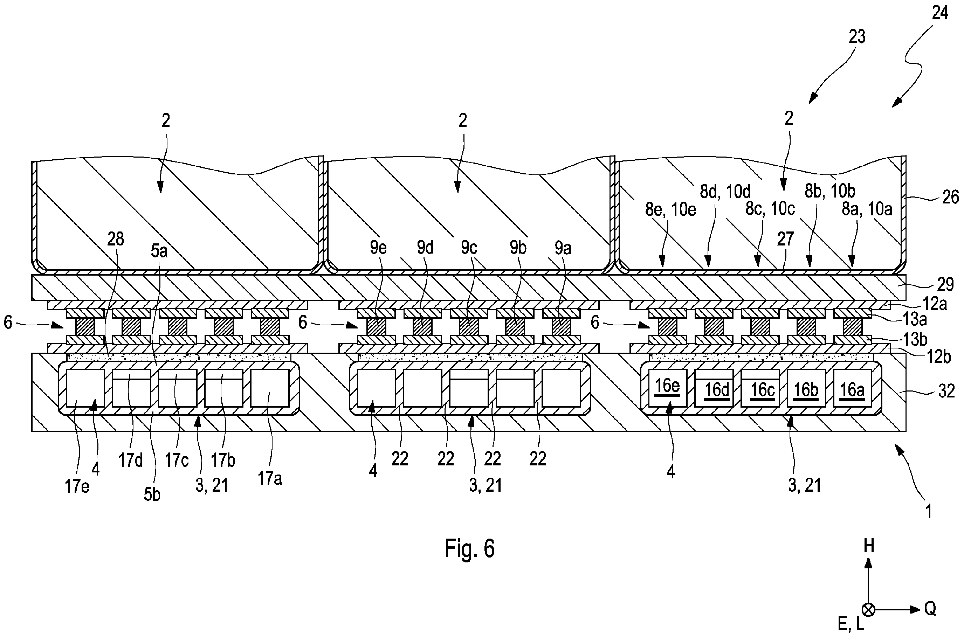

Die Figur 4 zeigt eine solche Batterie-Anordnung 24 mit - exemplarisch - zwölf zu temperierenden Batteriezellen 2, die zusammen eine Batterie 23 bilden, entlang einer Schnittlinie IV-IV der Figur 5. Die Figur 5 zeigt die Batterie-Anordnung 24 der Figur 4 in einem Querschnitt entlang der Schnittlinie V-V der Figur 4, die Figur 6 eine Detaildarstellung der Figur 4.

Man erkennt, dass die Temperiereinrichtung 1 für jede Batteriezelle 2 ein eigenes thermoelektrisches Modul 6 umfasst. Die thermoelektrischen Module 6 sind ebenso wie die Batteriezellen 2 entlang der Querrichtung Q nebeneinander angeordnet. Jede Batteriezelle 2 umfasst ein Gehäuse 26 mit einer Gehäusewand 27, mittels welcher die Batteriezelle 2 mechanisch und thermisch mit dem ihr zugeordneten thermoelektrischen Modul 6 verbunden ist.

Den Figuren 4 und 5 entnimmt man, dass das Flachrohr 21 für jedes thermoelektrische Modul 6 eine eigene Temperierstruktur 3 mit einem Innenraum 4 aufweist. Die Innenräume 4 können über geeignete Fluidleitungsstrukturen, beispielsweise über einen in Figur 5 gezeigten Sammler 32, derart miteinander verbunden sein, dass das Fluid über einen am Sammler 32 vorgesehenen gemeinsamen Einlass 25a auf die Innenräume 4 der Temperierstrukturen 3 verteilt wird und diese über einen gemeinsamen, ebenfalls am Sammler 32 vorgesehenen Auslass 25b wieder verlässt.

Mögliche technische Realisierungen der Strömungsführung durch den Sammler 32, die Flachrohre 21, die darin ausgebildeten Innenräume 4 und die wiederum in einem Innenraum 4 ausgebildeten Fluidkanäle 16a-16e sind dem Fachmann geläufig und sollen daher vorliegend nicht näher diskutiert werden.

Der Detaildarstellung der Figur 6 entnimmt man, dass die drei in dieser Figur exemplarisch gezeigten und als Flachrohre 21 ausgebildeten Temperierstrukturen 3 mit ihren Innenräumen 4 jeweils analog zur Temperiereinrichtung 1 gemäß den Figuren 1 bis 3 ausgebildet sein können. So zeigt die Figur 6, dass im jeweiligen Innenraum 4 eines jeden der drei Flachrohre 21 fünf Fluidkanäle 16a-16e ausgebildet sind, welche von einem jeweiligen Ventilelement 17a-17e verschlossen werden können. In Figur 6 sind einige Ventilelemente 17a-e exemplarisch in der geschlossenen Position und einige in der geöffneten Position dargestellt.

Wie bereits erwähnt, erlaubt das vorangehend vorgestellte modulare Konzept die Temperierung einer Batterie 23 mit einer beliebigen Anzahl an Batteriezellen 2. In einer bevorzugten Variante der hier vorgestellten Batterie-Anordnung 24 umfasst die Batterie 23 also eine Mehrzahl von Batteriezellen 2.

In einer besonders bevorzugten Variante der Batterie-Anordnung 24 kann für jedes Paar aus einer Batteriezelle 2 und thermoelektrischen Modul 6 jeweils wenigstens ein Temperatursensor 14a-14e vorgesehen werden. Dies erlaubt eine besonders genaue Temperaturmessung der Temperatur der einzelnen Batteriezellen 2 und somit auch eine individuelle Temperierung der Batteriezellen 2. Hierzu kann die von der Steuerungs-/Regelungseinheit 15 durchgeführte Temperaturregelung die Schaltelemente 11a-11e eines jeweiligen thermoelektrischen Moduls 6 in Abhängigkeit von der Temperatur zwischen ihrem geschlossenen und geöffneten Zustand umschalten, die von dem diesem thermoelektrischen Modul 6 zugeordneten wenigstens einen Temperatursensor 14a-14e bestimmbar ist. Mit dem Umschalten der elektrischen Schaltelemente 11a-11e geht dann ein Ein- und Ausschalten der das jeweilige Schaltelement 11a-11e aufweisenden Elementreihe 8a-8e sowie der den Elementreihen 8a-8e über jeweilige Aktuatorelemente 18a-18e zugeordnete Ventilelemente 17a-17e einher.

## Patentansprüche

1. Temperiereinrichtung (1) zum Temperieren wenigstens einer Batteriezelle (2) einer Batterie (23),
- mit einer von einem Fluid durchströmbaren Temperierstruktur (3), deren Innenraum (4) von wenigstens einer ersten Leitungswand (5a) begrenzt ist,
- mit wenigstens einem thermoelektrischen Modul (6), welches auf einer vom Innenraum (4) der Temperierstruktur (3) abgewandten Seite an der ersten Leitungswand (5a) der Temperierstruktur (3) angeordnet ist,
- wobei das thermoelektrische Modul (6) eine erste und wenigstens eine zweite Elementreihe (8a-8e) mit jeweils wenigstens zwei thermoelektrischen Elementen (9a-9e) aufweist,
- wobei sich die wenigstens zwei Elementreihen (8a-8e) jeweils entlang einer Erstreckungsrichtung (E) erstrecken,
- wobei die wenigstens zwei thermoelektrischen Elemente (9a) der ersten Elementreihe (8a) zur Ausbildung eines ersten elektrischen Leitungszweigs (10a) elektrisch in Reihe geschaltet sind und die wenigstens zwei thermoelektrischen Elemente (9b-9e) der wenigstens einen zweiten Elementreihe (8b-8e) zur Ausbildung eines zweiten elektrischen Leitungszweigs (10b-10e) elektrisch in Reihe geschaltet sind,
- wobei in wenigstens einer Elementreihe (8a-8e) ein elektrisches Schaltelement (11a-11e) vorgesehen ist, welches zwischen einem geschlossenen Zustand und einem geöffneten Zustand umschaltbar ist,
- wobei das thermoelektrische Modul (6) wenigstens einen Temperatursensor (14a-14e) zur Messung der Temperatur einer thermisch an das thermoelektrische Modul (6) gekoppelten Batteriezelle (2) umfasst,
- wobei eine mit dem wenigstens einen elektrischen Schaltelement (11a-11e) sowie dem wenigstens einen Temperatursensor (14a-14e) zusammenwirkende Steuerungs-/Regelungseinheit (15) vorgesehen ist, welche das wenigstens eine elektrische Schaltelement (11a-11e) in Abhängigkeit von der vom Temperatursensor (14a-14e) gemessenen Temperatur zwischen dem geöffneten und dem geschlossenen Zustand umschaltet,
- wobei in der Temperierstruktur (3) für jede Elementreihe (8a-8e) ein Fluidkanal (16a-16e) angeordnet ist, derart, dass jeder Fluidkanal (16a-16e) thermisch an die ihm zugeordnete Elementreihe (8a-8e) des thermoelektrischen Moduls (6) gekoppelt ist,
- wobei in wenigstens einem Fluidkanal (16a-16e), vorzugsweise in allen Fluidkanälen (16a-16e), ein Ventilelement (17a-17e) vorgesehen ist, welches zwischen einer geschlossenen Position, in welcher es den Fluidkanal (16a-16e) verschließt, und einer geöffneten Position, in welcher es den Fluidkanal (16a-16e) zum Durchströmen mit dem Fluid freigibt, verstellbar ist,
**dadurch gekennzeichnet, dass**
- in der dem wenigstens einen Fluidkanal (16a-16e) mit einem Ventilelement (17a-17e) zugeordneten Elementreihe (8a-8e) ein elektrisches Aktuatorelement (18a-18e) vorgesehen ist, welches elektrisch mit den wenigstens zwei thermoelektrischen Elementen (9a-9e) dieser Elementreihe (8a-8e) verbunden ist,
- das Aktuatorelement (18a-18e) mit dem Ventilelement (17a-17e) des zugeordneten Fluidkanals (16a-16e) derart zusammenwirkt, dass es das Ventilelement (17a-17e) in einem ersten Betriebszustand in die geöffnete Position verstellt und in einem zweiten Betriebszustand in die geschlossene Position verstellt oder umgekehrt.

2. Temperiereinrichtung nach Anspruch 1,
**dadurch gekennzeichnet, dass**
- die thermoelektrischen Elemente (9a-9e) einer Elementreihe (8a-8e) im Wesentlichen geradlinig entlang einer Längsrichtung (L) angeordnet sind,
- die wenigstens zwei Elementreihen (8a-8e) entlang einer quer zur Längsrichtung (L) verlaufenden Querrichtung (Q) benachbart zueinander angeordnet sind,
- die thermoelektrischen Elemente (9a-9e) einer Elementreihe (8a-8e) entlang einer Hochrichtung (H), die orthogonal zur Längsrichtung (L) und zur Querrichtung (Q) verläuft, zwischen einem ersten elektrisch isolierenden Isolationselement (12a) und einem zweiten elektrisch isolierenden Isolationselement (12b) angeordnet sind,
- das zweite elektrische Isolationselement (12b) in Hochrichtung (H) zwischen den thermoelektrischen Elementen (9a-9e) und der ersten Leitungswand (5a) der Temperierstruktur (3) angeordnet ist.

3. Temperiereinrichtung nach Anspruch 1 oder 2,
**dadurch gekennzeichnet, dass**
- in wenigstens einer Elementreihen (8a-8e), vorzugsweise in wenigstens zwei Elementreihen (8a-8e), höchst vorzugsweise in allen Elementreihen (8a-8e), wenigstens ein Temperatursensor (14a-14e), vorzugsweise wenigstens zwei Temperatursensoren (14a-14e), zur Messung der Temperatur einer thermisch an das thermoelektrische Modul (6) gekoppelten Batteriezelle (2) vorgesehen ist/sind,
- die Steuerungs-/Regelungseinheit (15) derart ausgebildet ist, dass das in einer bestimmten Elementreihe (8a-8e) vorgesehene Schaltelement (11a-11e) von der Steuerungs-/Regelungseinheit (15) in Abhängigkeit von der Temperatur, die mit dem derselben Elementreihe (8a-8e) zugeordneten Temperatursensor (14a-14e) bestimmbar ist, angesteuert wird.

4. Temperiereinrichtung nach einem der Ansprüche 1 bis 3,
**dadurch gekennzeichnet, dass**
das erste und/oder das zweite Schaltelement (11a-11e) einen Halbleiterschalter, insbesondere einen Thyristor, umfasst.

5. Temperiereinrichtung nach einem der vorhergehenden Ansprüche,
**dadurch gekennzeichnet, dass**
der Temperatursensor (14a-14e) als Infrarotsensor ausgebildet ist, mittels welchem zur Temperaturbestimmung die von der zu temperierenden Batteriezelle (2) emittierte Infrarot-Strahlung messbar ist.

6. Temperiereinrichtung nach einem der vorhergehenden Ansprüche,
**dadurch gekennzeichnet, dass**
das wenigstens eine elektrische Schaltelement (11a-11e) auf einer der Temperierstruktur (3) zugewandten Seite des thermoelektrischen Moduls (6) vorgesehen ist.

7. Temperiereinrichtung nach einem der vorhergehenden Ansprüche,
**dadurch gekennzeichnet, dass**
- das elektrische Aktuatorelement (18a-18e) ein elektrisch in Reihe zu den wenigstens zwei thermoelektrischen Elementen (9a-9e) geschaltetes elektrisches Spulenelement (19a-19e) umfasst, das im ersten Betriebszustand von elektrischem Strom durchflossen wird, nicht jedoch im zweiten Betriebszustand.

8. Temperiereinrichtung nach einem der vorhergehenden Ansprüche,
**dadurch gekennzeichnet, dass**
das Ventilelement (17a-17e) ein federelastisches Element (20a-20e), insbesondere eine Blattfeder, umfasst, welches gegen die geöffnete oder gegen die geschlossene Position vorgespannt ist.

9. Temperiereinrichtung nach einem der vorhergehenden Ansprüche,
**dadurch gekennzeichnet, dass**
das Ventilelement (17a-17e) als Mikroventil ausgebildet ist.

10. Temperiereinrichtung nach einem der vorhergehenden Ansprüche,
**dadurch gekennzeichnet, dass**
das Aktuatorelement (18a-18e) elektrisch zwischen zwei thermoelektrischen Elementen (9a-9e) angeordnet ist.

11. Temperiereinrichtung nach einem der vorhergehenden Ansprüche,
**dadurch gekennzeichnet, dass**
das Ventilelement (17a-17e), insbesondere entlang der Erstreckungsrichtung (E), im Bereich eines Aktuatorelements (18a-18e) angeordnet ist,

12. Temperiereinrichtung nach einem der vorhergehenden Ansprüche,
**dadurch gekennzeichnet, dass**
das elektrische Schaltelement (11a-11e) elektrisch zwischen zwei thermoelektrischen Elementen (9a-9e) angeordnet ist.

13. Batterie-Anordnung (24),
- mit einer Temperiereinrichtung (1) nach einem der vorhergehenden Ansprüche,
- mit einer wenigstens eine Batteriezelle (2) umfassenden Batterie (23), wobei die wenigstens eine Batteriezelle (2) auf einer der Temperierstruktur (3) abgewandten Seite des thermoelektrischen Moduls (6) der Temperiereinrichtung (1) an diesem angeordnet ist.

14. Batterie-Anordnung (24) nach Anspruch 13,
**dadurch gekennzeichnet, dass**
- die Temperiereinrichtung (1) ein erstes und wenigstens ein zweites thermoelektrisches Modul (6) umfasst,
- die Batterie (23) eine erste und wenigstens eine zweite Batteriezelle (2) umfasst,
- jede Batteriezelle (2) ein Gehäuse (26) mit einer Gehäusewand (27) umfasst, mittels welcher die Batteriezelle (2) mechanisch und thermisch mit dem ihr zugeordneten thermoelektrischen Modul (6) verbunden ist.

15. Batterie-Anordnung nach Anspruch 13 oder 14,
**dadurch gekennzeichnet, dass**
die Batterie (23) eine Mehrzahl von Batteriezellen (2) umfasst und für jede Batteriezelle (2) jeweils genau ein thermoelektrisches Modul (6) vorgesehen ist, welches mechanisch und thermisch mit dieser Batteriezelle (2) verbunden ist.

16. Batterie-Anordnung nach Anspruch 15,
**dadurch gekennzeichnet, dass**
dass für jedes Paar aus einer Batteriezelle (2) und thermoelektrischen Modul (6) jeweils wenigstens ein Temperatursensor (14a-14e) vorgesehen ist.

17. Batterie-Anordnung nach einem der Ansprüche 14 bis 16,
**dadurch gekennzeichnet, dass**
die Steuerungs-/Regelungseinheit (15) die elektrischen Schaltelemente (11a-11e) eines jeweiligen thermoelektrischen Moduls (6) in Abhängigkeit von der Temperatur, die von dem diesem thermoelektrischen Modul (6) zugeordneten wenigstens einen Temperatursensor (14a-14e) bestimmbar ist, zwischen ihrem geschlossenen und geöffneten Zustand umschaltet.

## Claims

1. Temperature control device (1) to control the temperature of at least one battery cell (2) of a battery (23),
- having a temperature control structure (3) through which a fluid can flow, the inner chamber (4) of which is delimited by at least one first line wall (5a),
- having at least one thermoelectric module (6), which is arranged on a side facing away from the inner chamber (4) of the temperature control structure (3) on the first line wall (5a) of the temperature control structure (3),
- wherein the thermoelectric module (6) has a first and at least a second row of elements (8a-8e) each having at least two thermoelectric elements (9a-9e),
- wherein the at least two rows of elements (8a-8e) each extend along an extension direction (E),
- wherein the at least two thermoelectric elements (9a) of the first row of elements (8a) are electrically connected in series to form a first electrical line branch (10a) and the at least two thermoelectric elements (9b-9e) of the at least a second row of elements (8b-8e) are electrically connected in series to form a second electrical line branch (10b-10e),
- wherein there is an electrical switching element (11a-11e) in at least one row of elements (8a-8e), which is switchable between a closed state and an open state,
- wherein the thermoelectric module (6) comprises at least one temperature sensor (14a-14e) for measuring the temperature of a battery cell (2) thermally coupled to the thermoelectric module (6),
- wherein there is a control/regulation unit (15) working with the at least one electrical switching element (11a-11e) as well as the at least one temperature sensor (14a-14e), which switches the at least one electrical switching element (11a-11e) between the open and closed state depending on the temperature measured by the temperature sensor (14a-14e),
- wherein a fluid channel (16a-16e) is arranged in the temperature control structure (3) for each row of elements (8a-8e), such that each fluid channel (16a-16e) is thermally coupled to the row of elements (8a-8e) of the thermoelectric module (6) assigned to it,
- wherein there is a valve element (17a-17e) in at least one fluid channel (16a-16e), preferably in all the fluid channels (16a-16e), which can be adjusted between a closed position, in which it closes the fluid channel (16a-16e), and an open position, in which it releases the fluid channel (16a-16e) to allow fluid to flow through, **characterised in that**
- there is an electric actuator element (18a-18e) in the row of elements (8a-8e) assigned to the at least one fluid channel (16a-16e) with a valve element (17a-17e), which is electrically connected to the at least two thermoelectric elements (9a-9e) of this row of elements (8a-8e),
- the actuator element (18a-18e) works together with the valve element (17a-17e) of the assigned fluid channel (16a-16e) such that it adjusts the valve element (17a-17e) in a first operating state into the closed position and in a second operating state into the closed position or vice versa.

2. Temperature control device according to claim 1,
**characterised in that**
- the thermoelectric elements (9a-9e) of a row of elements (8a-8e) are essentially arranged linearly along a longitudinal axis (L),
- the at least two rows of elements (8a-8e) are arranged adjacent to each other along a transverse axis (Q) running transverse to the longitudinal axis (L),
- the thermoelectric elements (9a-9e) of a row of elements (8a-8e) are arranged along a vertical axis (H), running perpendicular to the longitudinal axis (L) and the transverse axis (Q), between a first electrically insulating insulation element (12a) and a second electrically insulating insulation element (12b),
- the second electrical insulation element (12b) is arranged in a vertical axis (H) between the thermoelectric elements (9a-9e) and the first line wall (5a) of the temperature control structure (3).

3. Temperature control device according to claim 1 or 2,
**characterised in that**
- there is at least one temperature sensor (14a-14e), preferably at least two temperature sensors (14a-14e), for measuring the temperature of a battery cell (2) thermally coupled to the thermoelectric module (6) in at least one row of elements (8a-8e), preferably in at least two rows of elements (8a-8e), most preferably in all the rows of elements (8a-8e),
- the control/regulation unit (15) is designed such that the switching element (11a-11e) included in a specific row of elements (8a-8e) is controlled by the control/regulation unit (15) depending on the temperature, which can be determined by the temperature sensor (14a-14e) assigned to the same row of elements (8a-8e).

4. Temperature control device according to any one of the claims 1 to 3,
**characterised in that**
the first and/or the second switching element (11a-11e) comprises a semiconductor switch, in particular a thyristor.

5. Temperature control device according to any one of the preceding claims,
**characterised in that**
the temperature sensor (14a-14e) is designed as an infrared sensor, by means of which the infrared radiation emitted by the battery cell (2) whose temperature is to be controlled can be measured, in order to determine the temperature.

6. Temperature control device according to any one of the preceding claims,
**characterised in that**
there is at least one electrical switching element (11a-11e) on a side of the thermoelectric module (6) facing the temperature control structure (3).

7. Temperature control device according to any one of the preceding claims,
**characterised in that**
- the electric actuator element (18a-18e) comprises an electrical coil element (19a-19e) electrically connected in series to the at least two thermoelectric elements (9a-9e), through which an electrical current flows in the first operating state, but not in the second operating state.

8. Temperature control device according to any one of the preceding claims,
**characterised in that**
the valve element (17a-17e) comprises a spring-elastic element (20a-20e), in particular a leaf spring, which is pre-tensioned against the open or the closed position.

9. Temperature control device according to any one of the preceding claims,
**characterised in that**
the valve element (17a-17e) is designed as a micro-valve.

10. Temperature control device according to any one of the preceding claims,
**characterised in that**
the actuator element (18a-18e) is arranged electrically between two thermoelectric elements (9a-9e).

11. Temperature control device according to any one of the preceding claims,
**characterised in that**
the valve element (17a-17e) is arranged in the vicinity of an actuator element (18a-18e), in particular along the extension direction (E).

12. Temperature control device according to any one of the preceding claims,
**characterised in that**
the electrical switching element (11a-11e) is arranged electrically between two thermoelectric elements (9a-9e).

13. Battery arrangement (24),
- having a temperature control device (1) according to any one of the preceding claims,
- having a battery (23) comprising at least one battery cell (2), wherein the at least one battery cell (2) is arranged on a side of the thermoelectric module (6) of the temperature control device (1) facing away from the temperature control structure (3).

14. Battery arrangement (24) according to claim 13,
**characterised in that**
- the temperature control device (1) comprises a first and at least a second thermoelectric module (6),
- the battery (23) comprises a first and at least a second battery cell (2).
- each battery cell (2) comprises a housing (26) with a housing wall (27), by means of which the battery cell (2) is mechanically and thermally connected to the thermoelectric module (6) assigned to it.

15. Battery arrangement according to claim 13 or 14,
**characterised in that**
the battery (23) comprises a plurality of battery cells (2) and for each battery cell (2), in each case, there is precisely one thermoelectric module (6), which is mechanically and thermally connected to this battery cell (2).

16. Battery arrangement according to claim 15,
**characterised in that**
that for each pair made up of a battery cell (2) and a thermoelectric module (6), in each case, there is at least one temperature sensor (14a-14e).

17. Battery arrangement according to any one of the claims 14 to 16,
**characterised in that**
the control/regulation unit (15) switches the electrical switching elements (11a-11e) of a particular thermoelectric module (6) between their closed and open state depending on the temperature, which can be determined by the at least one temperature sensor (14a-14e) assigned to this thermoelectric module (6).

## Revendications

1. Dispositif d'équilibrage de température (1) pour tempérer au moins une cellule de batterie (2) d'une batterie (23),
- avec une structure d'équilibrage de température (3) qui peut être traversée par un fluide et dont l'espace intérieur (4) est délimité par au moins une première paroi de conduite (5a),
- avec au moins un module thermoélectrique (6) qui est agencé sur un côté à l'opposé de l'espace intérieur (4) de la structure d'équilibrage de température (3) au niveau de la première paroi de conduite (5a) de la structure d'équilibrage de température (3),
- dans lequel le module thermoélectrique (6) comporte une première et au moins une deuxième rangée d'éléments (8a-8e) avec à chaque fois au moins deux éléments thermoélectriques (9a-9e),
- dans lequel les au moins deux rangées d'éléments (8a-8e) s'étendent à chaque fois le long d'une direction d'extension (E),
- dans lequel les au moins deux éléments thermoélectriques (9a) de la première rangée d'éléments (8a) sont branchés électriquement en série afin de former une première branche de conduite électrique (10a) et les au moins deux éléments thermoélectriques (9b-9e) de l'au moins une deuxième rangée d'éléments (8b-8e) sont branchés électriquement en série afin de former une deuxième branche de conduite électrique (10b-10e),
- dans lequel, dans au moins une rangée d'éléments (8a-8e), il est prévu un élément commutateur électrique (11a-11e) qui peut être commuté entre un état fermé et un état ouvert,
- dans lequel le module thermoélectrique (6) comprend au moins un capteur de température (14a-14e) destiné à mesurer la température d'une cellule de batterie (2) couplée thermiquement au module électrique (6),
- dans lequel il est prévu une unité de commande/régulation (15) qui coopère avec l'au moins un élément commutateur électrique (11a-11e) ainsi qu'avec l'au moins un capteur de température (14a-14e) et qui commute l'au moins un élément commutateur électrique (11a-11e) entre l'état ouvert et l'état fermé en fonction de la température mesurée par le capteur de température (14a-14e),
- dans lequel un canal de fluide (16a-16e) est agencé dans la structure d'équilibrage de température (3) pour chaque rangée d'éléments (8a-8e) de telle sorte que chaque canal de fluide (16a-16e) est couplé thermiquement à la rangée d'éléments (8a-8e), qui lui est associée, du module thermoélectrique (6),
- dans lequel il est prévu dans au moins un canal de fluide (16a-16e), de préférence dans tous les canaux de fluide (16a-16e), un élément vanne (17a-17e) qui peut être déplacé entre une position fermée dans laquelle il ferme le canal de fluide (16a-16e) et une position ouverte dans laquelle il libère le canal de fluide (16a-16e) pour l'écoulement du fluide,
**caractérisé en ce que**
- il est prévu dans la rangée d'éléments (8a-8e) associée à l'au moins un canal de fluide (16a-16e) avec un élément vanne (17a-17e) un élément actionneur électrique (18a-18e) qui est relié électriquement avec les au moins deux éléments thermoélectriques (9a-9e) de cette rangée d'éléments (8a-8e),
- l'élément actionneur (18a-18e) coopère avec l'élément vanne (17a-17e) du canal de fluide (16a-16e) associé de telle sorte qu'il déplace l'élément vanne (17a-17e) dans un premier état de fonctionnement dans la position ouverte et dans un deuxième état de fonctionnement dans la position fermée ou inversement.

2. Dispositif d'équilibrage de température selon la revendication 1, **caractérisé en ce que**
- les éléments thermoélectriques (9a-9e) d'une rangée d'éléments (8a-8e) sont agencés globalement en ligne droite le long d'une direction longitudinale (L),
- les au moins deux rangées d'éléments (8a-8e) sont agencées au voisinage l'une de l'autre le long d'une direction transversale (Q) s'étendant transversalement par rapport à la direction longitudinale (L),
- les éléments thermoélectriques (9a-9e) d'une rangée d'éléments (8a-8e) sont agencés le long d'une direction verticale (H) qui s'étend perpendiculairement à la direction longitudinale (L) et à la direction transversale (Q) entre un premier élément d'isolation (12a) isolant électriquement et un deuxième élément d'isolation (12b) isolant électriquement,
- le deuxième élément d'isolation électrique (12b) est agencé dans la direction verticale (H) entre les éléments thermoélectriques (9a-9e) et la première paroi de conduite (5a) de la structure d'équilibrage de température (3).

3. Dispositif d'équilibrage de température selon la revendication 1 ou 2, **caractérisé en ce que**
- il est prévu dans au moins une rangée d'éléments (8a-8e), de préférence dans au moins deux rangées d'éléments (8a-8e), de préférence dans toutes les rangées d'éléments (8a-8e), au moins un capteur de température (14a-14e), de préférence au moins deux capteurs de température (14a-14e), afin de mesurer la température d'une cellule de batterie (2) couplée thermiquement au module thermoélectrique (6),
- l'unité de commande/régulation (15) est conçue de telle sorte que l'élément commutateur (11a-11e) prévu dans une certaine rangée d'éléments (8a-8e) est commandé par l'unité de commande/régulation (15) en fonction de la température qui peut être déterminée avec le capteur de température (14a-14e) associé à la même rangée d'éléments (8a-8e).

4. Dispositif d'équilibrage de température selon l'une quelconque des revendications 1 à 3, **caractérisé en ce que** le premier et/ou le deuxième élément commutateur (11a-11e) comprend un commutateur à semi-conducteurs, en particulier un thyristor.

5. Dispositif d'équilibrage de température selon l'une quelconque des revendications précédentes, **caractérisé en ce que** le capteur de température (14a-14e) est conçu comme un capteur infrarouge au moyen duquel le rayonnement infrarouge émis par la cellule de batterie (2) à tempérer peut être mesuré afin de déterminer la température.

6. Dispositif d'équilibrage de température selon l'une quelconque des revendications précédentes, **caractérisé en ce que** l'au moins un élément commutateur électrique (11a-11e) est prévu sur un côté, proche de la structure d'équilibrage de température (3), du module thermoélectrique (6).

7. Dispositif d'équilibrage de température selon l'une quelconque des revendications précédentes, **caractérisé en ce que** l'élément actionneur électrique (18a-18e) comprend un élément de bobine électrique (19a-19e) qui est branché électriquement en série avec les au moins deux éléments thermoélectriques (9a-9e) et qui est parcouru par un courant électrique dans le premier état de fonctionnement mais pas dans le deuxième état de fonctionnement.

8. Dispositif d'équilibrage de température selon l'une quelconque des revendications précédentes, **caractérisé en ce que** l'élément vanne (17a-17e) comprend un élément élastique de type ressort (20a-20e), en particulier un ressort à lames, qui est précontraint contre la position ouverte ou contre la position fermée.

9. Dispositif d'équilibrage de température selon l'une quelconque des revendications précédentes, **caractérisé en ce que** l'élément vanne (17a-17e) est conçu comme une micro-vanne.

10. Dispositif d'équilibrage de température selon l'une quelconque des revendications précédentes, **caractérisé en ce que** l'élément actionneur (18a-18e) est agencé électriquement entre deux éléments thermoélectriques (9a-9e).

11. Dispositif d'équilibrage de température selon l'une quelconque des revendications précédentes, **caractérisé en ce que** l'élément vanne (17a-17e) est agencé, en particulier le long de la direction d'extension (E), dans la zone d'un élément actionneur (18a-18e).

12. Dispositif d'équilibrage de température selon l'une quelconque des revendications précédentes, **caractérisé en ce que** l'élément commutateur électrique (11a-11e) est agencé électriquement entre deux éléments thermoélectriques (9a-9e).

13. Agencement de batterie (24),
- avec un Dispositif d'équilibrage de température (1) selon l'une quelconque des revendications précédentes,
- avec une batterie (23) comprenant au moins une cellule de batterie (2), l'au moins une cellule de batterie (2) étant agencée sur un côté, éloigné de la structure d'équilibrage de température (3), du module thermoélectrique (6) du Dispositif d'équilibrage de température (1).

14. Agencement de batterie (24) selon la revendication 13, **caractérisé en ce que**
- le Dispositif d'équilibrage de température (1) comprend un premier et au moins un deuxième module thermoélectrique (6),
- la batterie (23) comprend une première et au moins une deuxième cellule de batterie (2),
- chaque cellule de batterie (2) comprend un boîtier (26) avec une paroi de boîtier (27) au moyen de laquelle la cellule de batterie (2) est reliée mécaniquement et thermiquement au module thermoélectrique (6) qui lui est associé.

15. Agencement de batterie selon la revendication 13 ou 14, **caractérisé en ce que** la batterie (23) comprend une multitude de cellules de batterie (2) et il est prévu pour chaque cellule de batterie (2) à chaque fois exactement un module thermoélectrique (6) qui est relié mécaniquement et thermiquement à cette cellule de batterie (2).

16. Agencement de batterie selon la revendication 15, **caractérisé en ce qu'**il est prévu pour chaque couple constitué d'une cellule de batterie (2) et d'un module thermoélectrique (6) à chaque fois au moins un capteur de température (14a-14e).

17. Agencement de batterie selon l'une quelconque des revendications 14 à 16, **caractérisé en ce que** l'unité de commande/régulation (15) commute entre leur état fermé et ouvert les éléments commutateurs électriques (11a-11e) d'un module thermoélectrique respectif (6) en fonction de la température qui peut être déterminée par l'au moins un capteur de température (14a-14e) associé à ce module thermoélectrique (6).
